# EUROPÄISCHE PATENTSCHRIFT

(11) **EP 1 514 500 B1**
(45) Veröffentlichungstag und Bekanntmachung des Hinweises auf die Patenterteilung: **07.05.2008**
(21) Anmeldenummer: 04015508.7
(22) Anmeldetag: 01.07.2004
(51) Int. Cl.: A47J 31/057

(54) **Getränkezubereitungsvorrichtung**
Beverage maker
Appareil de préparation de boisson

(30) Priorität: 09.09.2003 DE 10341542
(43) Veröffentlichungstag der Anmeldung: 16.03.2005
(73) Patentinhaber: BSH Bosch und Siemens Hausgeräte GmbH, 81739 München (DE)
(72) Erfinder: Jäger, Harald, 83349 Palling-Freutsmoos (DE); Kramer, Siegmund, 83417 Kirchanschöring (DE); Magg, Johann, 83368 St. Georgen (DE); Obermaier, Markus, 83365 Nussdorf (DE); Stief, Peter, 83329 Waging am See (DE)

(56) Entgegenhaltungen:
- US-A- 4 662 271
- US-A- 5 060 558
- US-A- 5 388 501
- US-A- 6 164 191

## Beschreibung

Die vorliegende Erfindung betrifft eine Getränkezubereitungsvorrichtung gemäß Oberbegriff des Patentanspruchs 1.

Getränkezubereitungsvorrichtungen sind bspw. als sogenannte Kaffee-, Espresso- oder als Teemaschinen bekannt. Derartige Heißgetränkezubereitungsvorrichtungen weisen typischer Weise einen Behälter auf, aus dem über eine vom Behälterboden mündende Leitung Flüssigkeit für ein zu bereitendes Getränk entnehmbar ist. Zwischen dem Ablauf am Behälterboden und einem Gefäß für das aufgebrühte Getränk ist weiterhin eine Heizeinrichtung sowie ggf. eine Fördereinrichtung angeordnet. Soll der Füllstand des Wassers bzw. der Flüssigkeit im Behälter angezeigt werden, so bieten sich hierfür unterschiedliche Möglichkeiten. Bei einer einfachen Ausführungsform kann bspw. vorgesehen sein, dass der Behälter selbst über eine Füllstandsmess- bzw. Anzeigeeinrichtung verfügt, die aus einem einfachen, vertikal angeordneten transparenten Bereich, bspw. einem Schauglas, bestehen kann. Ggf. kann auch der gesamte Behälter aus transparentem bzw. durchscheinendem Material bestehen und von außen zumindest teilweise einsehbar sein.

Darüber hinaus sind auch Füllstandsanzeiger bekannt, die eine kommunizierende Röhre umfassen, in welcher der Füllstand immer eine gleiche Höhe aufweist wie im Behälter selbst. Eine einfache Ausführungsform einer derartigen Anzeigevorrichtung für eine Heißgetränkezubereitungsvorrichtung ist aus der US 61 64 191 bekannt. Hierbei dient eine transparente, kommunizierende Röhre als optische Anzeigeeinrichtung eines Füllstandes im Wasserbehälter der Vorrichtung.

Eine Füllstandsanzeigevorrichtung für eine Kaffee- oder Espressomaschine mit einer kommunizierenden Röhre und einer daran angeordneten elektrischen Messeinrichtung ist weiterhin aus der WO 01/60221 A1 bekannt.

Bei den bekannten Getränkezubereitungsvorrichtungen mit derartigen Füllstandsmess- bzw. Anzeigevorrichtungen ist jedoch der Flüssigkeitsbehälter nicht abnehmbar bzw. von der Getränkezubereitungsvorrichtung trennbar, was beispielsweise zu Reinigungszwecken wünschenswert sein kann.

Die US 5,060,558 beschreibt beispielsweise ein Gerät zum Zubereiten von Getränken mit einer abnehmbaren Wassertank; auch in der US 4,662,271 und der US 6,164,191 werden Kaffeemaschinen mit abnehmbaren Wassertanks beschrieben.

Die Aufgabe der vorliegenden Erfindung besteht darin, eine gattungsgemäße Getränkezubereitungsvorrichtung zur Verfügung zu stellen, bei der eine Reinigung eines Flüssigkeitsbehälters und/oder eines Gehäuseinneren der Vorrichtung erleichtert ist und die über eine Messeinrichtung verfügt, die stets den aktuellen Füllstand im Behälter ausweist.

Diese Aufgabe wird mit dem Gegenstand des unabhängigen Patentanspruchs gelöst. Merkmale vorteilhafter Weiterbildungen ergeben sich aus den abhängigen Ansprüchen.

Eine erfindungsgemäße Getränkezubereitungsvorrichtung mit den Merkmalen des Patentanspruchs 1 ist gekennzeichnet durch einen Flüssigkeitsbehälter der von der Getränkezubereitungsvorrichtung abnehmbar bzw. von dieser trennbar ist und durch eine kommunizierende Röhre mit einer elektrischen Messeinrichtung für einen aktuellen Füllstand im Behälter. Zu diesem Zweck kann der Behälter bspw. mittels einer trennbaren Steck-, Rast-, Schraub- oder Bajonettverbindung oder dergleichen mit einer Leitung verbunden sein, aus der Flüssigkeit für ein zu bereitendes Getränk aus dem Behälter entnehmbar ist. Die erfindungsgemäße Getränkezubereitungsvorrichtung mit dem abnehmbaren Behälter weist den Vorteil auf, dass die elektrische Messeinrichtung vollständig vom Behälter getrennt sein kann, so dass dieser weder über eine Anzeige noch über Leitungsverbindungen oder dergleichen zur einer Füllstandssensoreinrichtung verfügen muss. Der Behälter kann daher problemlos zu Reinigungszwecken oder zum Auffüllen aus der Vorrichtung entnommen bzw. von dieser getrennt werden, was Wartungsarbeiten erheblich erleichtern kann.

Die elektrische Messeinrichtung ist funktional vollständig einer kommunizierenden Röhre zugeordnet, die vom Behälter getrennt in der Vorrichtung angeordnet ist und über ein Leitungssystem derart mit dem Behälter in Verbindung steht, dass in der kommunizierenden Röhre immer jeweils der gleiche Füllstand herrscht wie im Behälter selbst. Mit der kommunizierenden Röhre können somit unterschiedliche Sensorsysteme zur Ermittlung der befüllten Wasser- oder Flüssigkeitsmenge im Behälter gekoppelt sein, die lokal und funktional unabhängig vom eigentlichen Flüssigkeitsbehälter sind.

Ein im Behälter befindliches Sensorsystem könnte zum einen dessen Optik stören. Zusätzlich müsste bei einem abnehmbaren Wassertank ein sich im Tank befindliches Sensorsystem zur im Gerät befindlichen Steuerung elektrisch so kontaktiert werden, dass der Tank vom Kunden weiterhin einfach abzunehmen und wieder aufzusetzen ist. Die elektrische Messeinrichtung mit der kommunizierenden Röhre sieht dagegen vor, dass diese mit dem Behälter direkt verbunden ist, womit das Füllniveau in der Röhre gleich dem Füllniveau des Behälters ist. Das gesamte System aus T-Abzweigung und kommunizierender Röhre befindet sich innerhalb des Gehäuses der Vorrichtung und ist deshalb für den Kunden nicht sichtbar.

Für eine sichere Funktion muss die Röhre am oberen Ende offen sein, damit die Luft frei aus der Röhre entweichen kann und sich kein Gegendruck aufbaut, der die Füllhöhe beeinflussen würde. Weiterhin muss die T-Abzweigung so bemessen sein, dass die Flüssigkeit frei und ohne Bildung von Luftblasen in die Röhre und aus dieser heraus strömen kann. Um ein Überlaufen zu vermeiden, muss die Röhre mindestens so hoch sein wie das maximal zulässige Füllstandsniveau des Behälters. In einer alternativen Ausführungsform kann die kommunizierende Röhre einsteckbar ausgeführt sein. Auf diese Weise können unterschiedliche Gerätevarianten mit oder ohne Röhre realisierbar sein. Bei dem abnehmbaren Behälter kann ein zusätzliches Ventil zwischen T-Abzweigung und Behälter verhindern, dass bei Abnahme eines vollen Tanks das sich in der Röhre befindliche Wasser aus der Aufsetzöffnung des Gehäuses für den Tank läuft.

Die kommunizierende Röhre kann zumindest teilweise transparent oder durchscheinend ausgestaltet sein, so dass der Füllstand im Behälter direkt an der kommunizierenden Röhre ablesbar ist. Hierzu kann die kommunizierende Röhre und/oder ein Gehäuse der Getränkezubereitungsvorrichtung ein Schauglas aufweisen. Das Ablesen des Füllstands im Behälter bzw. in der kommunizierenden Röhre kann weiterhin dadurch erleichtert werden, dass in dieser ein Schwimmer angeordnet ist, der eine geringere Dichte aufweist als die im Behälter befindliche Flüssigkeit, so dass der Schwimmerstand jeweils das obere Füllstandsniveau in der kommunizierenden Röhre und damit im Behälter anzeigt. Vorzugsweise ist der Schwimmer farblich so gegen die Röhre abgestimmt, dass er leicht von außen erkennbar ist. Hierzu eignet sich bspw. ein roter oder gelber Schwimmer.

Eine alternative Ausführungsform der Erfindung kann vorsehen, dass der Schwimmer mit einem weg- und/oder winkelabhängigen Messwertgeber gekoppelt ist, der ein füllstandsabhängiges, elektrisches Messsignal liefern kann. Dieses kann beispielsweise zur analogen oder digitalen bzw. einer farblich kodierten Anzeige verschiedener Flüssigkeitsstände im Behälter verwendet werden.

Eine alternative Ausführungsform sieht vor, dass die kommunizierende Röhre als kapazitiver Messwertgeber ausgebildet ist. Hierbei weist die kommunizierende Röhre zwei Elektroden auf, die gegenüber liegend und entlang der Längserstreckungsrichtung der Röhre angeordnet sind. Der Inhalt der kommunizierenden Röhre fungiert hierbei als Dielektrikum, so dass sich bei veränderndem Füllstand und damit veränderlicher Flüssigkeitsmenge zwischen den beiden Elektroden eine Kapazität des als Kondensator fungierenden Messwertgebers verändert. Das Füllstandssignal kann wiederum für eine entsprechende Anzeige ausgewertet werden.

Eine weitere alternative Ausführungsform kann vorsehen, dass die kommunizierende Röhre als induktiver Messaufnehmer zur Lieferung eines Füllstandssignals ausgebildet ist. Hierbei weist die kommunizierenden Röhre vorzugsweise eine dünne Drahtspule auf, die um die Länge der Röhre gewickelt ist, so dass sich bei veränderlichem Flüssigkeitsstand innerhalb der kommunizierenden Röhre ein Spulenkern verändert, was zu einer veränderlichen Induktivität der Spule führen kann.

Vorzugsweise ist innerhalb der Leitung zwischen Behälter und Getränkebereitungseinrichtung ein Rückschlagventil angeordnet, das ein Rückströmen von Flüssigkeit in den Behälter bzw. in die kommunizierende Röhre verhindert. Ein zusätzliches Rückschlagventil kann am Auslassbereich des Behälters angeordnet sein. Ein solches Rückschlagventil verhindert ein Auslaufen von Flüssigkeit bei abgenommenem, vollem Behälter. Vorzugsweise ist in diesem Fall ein weiteres Rückschlagventil zwischen Leitungsschnitt und kommunizierender Röhre vorgesehen, das ein Ausströmen der in der kommunzierenden Röhre befindlichen Flüssigkeit in das Gehäuseinnere der Vorrichtung verhindert.

Die Getränkezubereitungsvorrichtung kann insbesondere eine Vorrichtung zur Heißgetränkezubereitung sein, beispielsweise eine Kaffee- oder Espressomaschine oder auch eine Teemaschine. Hierbei befindet sich Wasser im Behälter, das zu einer Heizeinrichtung gefördert wird und das zum Aufbrühen des Heißgetränks dient. In diesem Fall ist vorzugsweise nur ein Behälter vorgesehen, dem auch nur eine kommunizierende Röhre zugeordnet ist. Die Getränkezubereitungsvorrichtung kann jedoch auch zur Zubereitung von Kaltgetränken, Säften oder Mischgetränken dienen. Hierbei können gegebenenfalls mehrere Behälter für verschiedene Flüssigkeiten vorgesehen sein, die gegebenenfalls jeweils über eine ihnen zugeordnete kommunizierenden Röhre verfügen, die als Mess- und/oder Anzeigeeinrichtung zur Füllstandsanzeige bzw. Messung dient.

Die Erfindung wird nachfolgend anhand eines bevorzugten Ausführungsbeispiels unter Bezugnahme der beiliegenden Zeichnungen näher erläutert. Dabei zeigt:
- Figur 1: eine Heißgetränkezubereitungsvorrichtung in schematischer Darstellung,
- Figur 2: ein Blockschaltbild einer Anordnung einer Füllstandsanzeige- bzw. Füllstandsmesseinrichtung,
- Figur 3a: ein erstes Ausführungsbeispiel einer kommunizierenden Röhre zur Füllstandsanzeige,
- Figur 3b: ein zweites Ausführungsbeispiel einer kommunizierenden Röhre als Füllstandsmesseinrichtung und
- Figur 3c: ein weiteres alternatives Ausführungsbeispiel einer berührungslos arbeitenden Füllstandsmesseinrichtung.

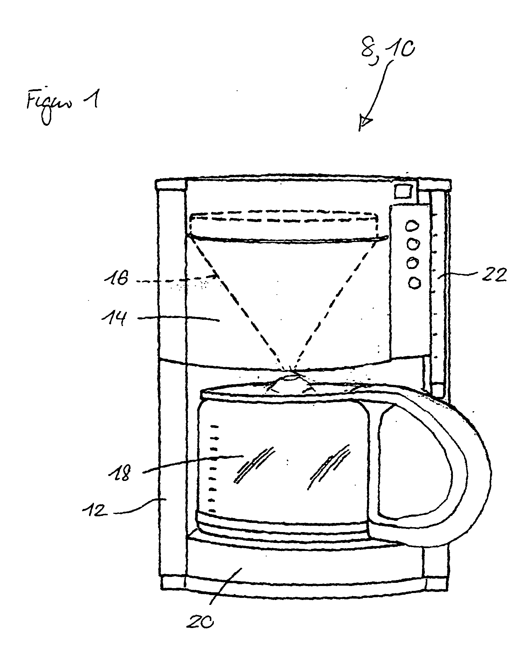

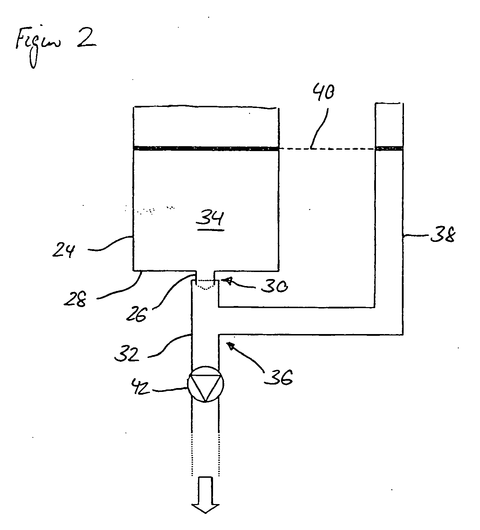

Die Figur 1 zeigt eine Kaffeemaschine 10, die als Ausführungsbeispiel für eine erfindungsgemäße Getränkezubereitungsvorrichtung 8 dient. Die Kaffeemaschine 10 weist ein Gehäuse 12 mit einem darin befindlichen herausnehmbaren Wassertank (vgl. Figur 2) auf. Weiterhin umfasst die Kaffeemaschine 10 ein gegebenenfalls schwenkbares Filtergehäuse 14, in das ein Filter 16 mit darin befindlichem Getränkepulver eingelegt und nach Gebrauch wieder entnommen werden kann. Aufgebrühter Kaffee läuft aus dem Filter in eine Kanne 18, die üblicher Weise auf einer Warmhalteplatte 20 abgestellt ist. Ggf. kann die Kanne 18 auch als Thermoskanne ausgeführt sein.

An einem seitlichen Bereich am Gehäuse 12 der Kaffeemaschine 10 befindet sich ein vertikal angeordnetes Schauglas 22, das im vorliegenden Ausführungsbeispiel als Anzeigeeinrichtung für einen Füllstand des Wasserbehälters der Kaffeemaschine 10 dient. Am transparenten Schauglas 22 kann der Füllstand des Behälters direkt abgelesen werden, ggf. unterstützt durch einen im Schauglas 22 befindlichen farbigen Schwimmer, bspw. eine mit Luft gefüllte Kugel aus Kunststoff.

Die Figur 2 verdeutlicht in einem schematischen Blockschaltbild die Anordnung des Behälters 24, der einen Ablauf 26 am Behälterboden 28 aufweist. Der Ablauf 26 ist über ein Verbindungselement 30 lösbar mit einer Leitung 32 verbunden, über welche die im Behälter 24 befindliche Flüssigkeit 34 zu einer Heizung oder einer anderen Getränkebereitungseinrichtung (nicht dargestellt) gefördert wird. In der Leitung 32 ist eine T-Abzweigung 36 vorgesehen, über welche eine kommunzierenden Röhre 38 mit dem Leitungssystem verbunden ist. Im gezeigten, einfachsten Ausführungsbeispiel ist eine offene Verbindung zwischen kommunizierender Röhre 38 und Behälter 24 vorgesehen. Behälter 24 und kommunizierende Röhre 38 sind vorzugsweise oben offen ausgeführt, so dass ein Füllstand 40 im Behälter 24 sowie in der kommunizierenden Röhre 38 stets das gleiche Niveau aufweist.

Zwischen T-Abzweigung 36 und dem weiteren Leitungssystem, das zur Getränkebereitungseinrichtung führt, ist im gezeigten Ausführungsbeispiel ein Rückschlagventil 42 angeordnet, das ein Rückströmen von Flüssigkeit 34 in den Behälter 24 und insbesondere in die kommunizierende Röhre 38 verhindern soll. Der Behälter 24 kann beispielsweise über ein als Steck-, Rast-, Bajonett- oder Schraubverbindungselement 30 mit der Leitung 32 verbunden sein. Vorzugsweise ist eine zusätzliche Abstützung für den Behälter im Gehäuse der Getränkezubereitungsvorrichtung vorgesehen, so dass nicht das Verbindungselement 30 die gesamten Kräfte des Behältergewichts aufnehmen muss.

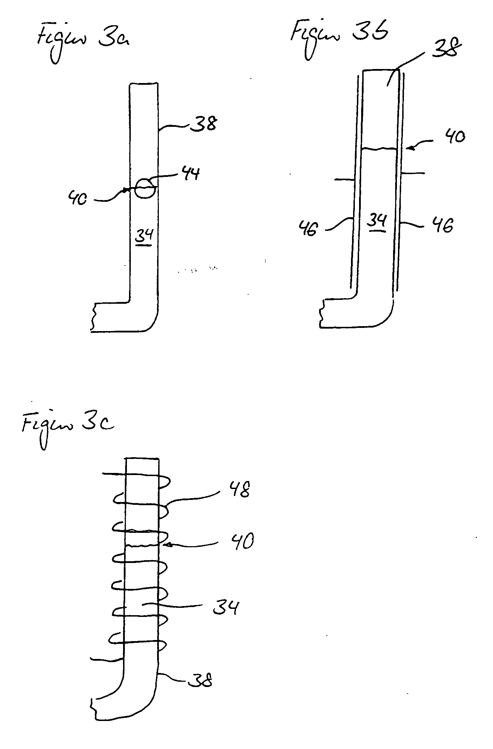

Die Figur 3a zeigt eine einfache Ausführungsform der als Anzeigeeinrichtung ausgestalteten kommunizierenden Röhre 38, die in diesem Fall transparent oder durchscheinend ausgeführt sein kann oder zumindest einen über ihre gesamte Länge reichenden transparenten oder durchscheinenden Bereich, beispielsweise ein Schauglas, aufweist. Der Füllstand 40 kann im einfachsten Fall direkt abgelesen werden. Er kann aber auch, wie dargestellt, über einen Schwimmer 44 angezeigt werden, der aufgrund seiner geringeren Dichte als die Flüssigkeit im Behälter stets auf der Flüssigkeit aufschwimmt. Eine alternative Ausführungsform kann vorsehen, dass der Schwimmer 44 mit einer Messeinrichtung gekoppelt ist, die ein füllstandsabhängiges Messsignal zu einer Auswerteschaltung liefert, die wiederum eine Anzeige für den Füllstand ansteuert. Der Schwimmer 44 kann bspw. eine Kunststoffkugel sein, die innen hohl und mit Luft gefüllt ist.

Die Figur 3b zeigt eine alternative Ausgestaltung der Mess- bzw. Anzeigeeinrichtung an der kommunzierenden Röhre 38. Hierbei sind an Außenseiten der kommunizierenden Röhren 38 zwei Elektroden 46 angeordnet, die beispielsweise als Stab- oder Plattenelektroden ausgestaltet sein können. Die Elektroden 46 sind gegenüber liegend angeordnet und erstrecken sich vorzugsweise über die gesamte Länge der kommunizierenden Röhre 38. Die in der Röhre 38 befindliche Flüssigkeit 34 sowie die oberhalb des Füllstands 40 befindliche Luft fungieren hierbei als Dielektrikum zwischen den beiden Elektroden 46, so dass sich mit veränderndem Füllstand 40 auch die Kapazität des zwischen den beiden Elektroden 46 gebildeten Kondensators ändert. Die sich ändernde Kapazität dieses Kondensators kann wiederum zur Erzeugung eines Mess- und/oder Anzeigesignals für eine optische Anzeigeeinrichtung an der Getränkezubereitungsvorrichtung verwendet werden.

Eine alternative Ausführungsform gemäß Figur 3c kann beispielsweise vorsehen, dass anstatt der beiden Elektroden 46 eine Drahtwicklung in mehreren Windungen um die Außenwand der kommunizierenden Röhre 38 angeordnet ist, so dass sich eine Induktivität der hierdurch gebildeten Spule 48 aufgrund des mit variablem Füllstand sich ändernden Spulenkerns ändert. Eine Kombination der Varianten gemäß der Figuren 3a und 3c kann bspw. darin bestehen, dass an dem Schwimmer 44 eine Metallisierung angebracht wird, so dass die Schwimmerposition innerhalb der Spule 48 und damit der Füllstand 40 in der Röhre 38 erfasst werden kann.

Bei den beschriebenen Ausführungsformen mit einem Messaufnehmer braucht die kommunizierende Röhre 38 nicht durchscheinend oder transparent ausgebildet sein, da kein direktes Ablesen des Füllstands 40 mehr erforderlich ist. Der Vorteil der beiden Varianten gemäß Figur 3b und Figur 3c gegenüber der Schwimmervariante gemäß Figur 3a besteht insbesondere darin, dass damit ein berührungslos und zuverlässig arbeitendes Prinzip zur Füllstandsmessung zur Verfügung gestellt wird, bei dem keinerlei mechanische Komponenten zur Messwerterfassung mehr erforderlich sind.

Die erfindungsgemäße Getränkezubereitungsvorrichtung 8 kann je nach gewünschter Ausführungsform mehrere solcher Behälter 24 aufweisen, denen vorzugsweise jeweils eine kommunizierenden Röhre 38 als Füllstandmess- bzw. Anzeigeeinrichtung zugeordnet ist. Bei einer Getränkezubereitungsvorrichtung 8 mit nur einem Behälter 24 kann diese insbesondere zur Heißgetränkezubereitung dienen. Eine Getränkezubereitungsvorrichtung 8 mit zwei oder mehr Behältern 24 kann insbesondere zur Zubereitung von Kaltgetränken, Säften, Mischgetränken oder dergleichen dienen.

### Bezugszeichenliste

- 8: Getränkezubereitungsvorrichtung
- 10: Kaffeemaschine
- 12: Gehäuse
- 14: Filtergehäuse
- 16: Filter
- 18: Kanne
- 20: Warmhalteplatte
- 22: Schauglas
- 24: Behälter
- 26: Ablauf
- 28: Behälterboden
- 30: Verbindungselement
- 32: Leitung
- 34: Flüssigkeit
- 36: T-Abzweigung
- 38: kommunizierende Röhre
- 40: Füllstand
- 42: Rückschlagventil
- 44: Schwimmer
- 46: Elektroden
- 48: Spule

## Patentansprüche

1. Getränkezubereitungsvorrichtung (8) mit einem Behälter (24), der einen Ablauf (26) am Behälterboden (28) aufweist, aus dem über eine Leitung (32) Flüssigkeit (34) für ein zu bereitendes Getränk entnehmbar ist, und der von der Getränkezubereitungsvorrichtung (8) abnehmbar bzw. von dieser trennbar ist,
**gekennzeichnet durch**
eine kommunizierende Röhre (38) mit einer elektrischen Messeinrichtung für einen aktuellen Füllstand (40) im Behälter (24), wobei die kommunizierende Röhre (38) an einem unteren Ende mit dem Ablauf (26) des Behälterbodens (28) in Verbindung steht und deren offenes oberes Ende zumindest bis zu einem maximalen Füllniveau im Behälter (24) reicht.

2. Getränkezubereitungsvorrichtung nach Anspruch 1, **dadurch gekennzeichnet, dass** der Behälter (24) mit der Leitung (32) mittels einer trennbaren Steck-, Rast-, Schraub- oder Bajonettverbindung verbunden ist.

3. Getränkezubereitungsvorrichtung nach Anspruch 1 oder 2, **dadurch gekennzeichnet, dass** die kommunizierende Röhre (38) zumindest teilweise transparent oder durchscheinend ist.

4. Getränkezubereitungsvorrichtung nach Anspruch 3, **dadurch gekennzeichnet, dass** der Füllstand (40) im Behälter (24) mittels eines Schauglases (22) in der kommunizierenden Röhre (38) und/oder in einem Gehäuse (12) der Getränkezubereitungsvorrichtung (8) ablesbar ist.

5. Getränkezubereitungsvorrichtung nach Anspruch 3 oder 4, **dadurch gekennzeichnet, dass** innerhalb der kommunizierenden Röhre (38) ein Schwimmer (44) angeordnet ist.

6. Getränkezubereitungsvorrichtung nach Anspruch 5, **dadurch gekennzeichnet, dass** der Füllstand (40) im Behälter (24) über einen aktuellen Schwimmerstand ablesbar ist.

7. Getränkezubereitungsvorrichtung nach Anspruch 5, **dadurch gekennzeichnet, dass** der Schwimmer (44) mit einem weg- und/oder winkelabhängigen Messwertgeber zur Lieferung eines Füllstandsignals gekoppelt ist.

8. Getränkezubereitungsvorrichtung nach einem der voranstehenden Ansprüche, **dadurch gekennzeichnet, dass** die kommunizierende Röhre (38) als kapazitiver Messwertgeber zur Lieferung eines Füllstandsignals ausgebildet ist.

9. Getränkezubereitungsvorrichtung nach Anspruch 8, **dadurch gekennzeichnet, dass** die kommunizierende Röhre (38) zwei Elektroden (46) aufweist, die gegenüber liegend und in Längserstreckungsrichtung der Röhre (38) angeordnet sind.

10. Getränkezubereitungsvorrichtung nach Anspruch 8 oder 9, **dadurch gekennzeichnet, dass** der Inhalt der kommunizierenden Röhre (38) als Dielektrikum fungiert.

11. Getränkezubereitungsvorrichtung nach einem der Ansprüche 1 bis 7, **dadurch gekennzeichnet, dass** die kommunizierende Röhre (38) als induktiver Messaufnehmer zur Lieferung eines Füllstandsignals ausgebildet ist.

12. Getränkezubereitungsvorrichtung nach einem der voranstehenden Ansprüche, **dadurch gekennzeichnet, dass** innerhalb der Leitung (32) zwischen Behälter (24) und Getränkebereitungseinrichtung ein Rückschlagventil (42) angeordnet ist.

## Claims

1. Beverage preparation device (8) comprising a container (24), which has an outlet (26) at the container base (28), from which liquid (34) for a beverage to be prepared is removable via a duct (32) and which can be removed from the beverage preparation device (8) or separated therefrom, **characterised by** a communicating pipe (38) with an electrical measuring device for an instantaneous filling state (40) in the container (24), wherein the communicating pipe (38) is connected at a lower end with the outlet (26) of the container base (28) and the open upper end thereof reaches at least to a maximum filling level in the container (24).

2. Beverage preparation device according to claim 1, **characterised in that** the container (24) is connected with the duct (32) by means of a separable plug, detent, screw or bayonet connection.

3. Beverage preparation device according to claim 1 or 2, **characterised in that** the communicating pipe (38) is at least partly transparent or translucent.

4. Beverage preparation device according to claim 3, **characterised in that** the filling state (40) in the container (24) can be read off by means of a viewing glass (22) in the communicating pipe (38) and/or in a housing (12) of the beverage preparation device (8).

5. Beverage preparation device according to claim 3 or 4, **characterised in that** a float (44) is arranged within the communicating pipe (38).

6. Beverage preparation device according to claim 5, **characterised in that** the filling state (40) in the container (24) can be read off by way of an instantaneous float state.

7. Beverage preparation device according to claim 5, **characterised in that** the float (44) is coupled with a measured value transmitter, which is dependent on travel and/or angle, for supply of a filling state signal.

8. Beverage preparation device according to one of the preceding claims, **characterised in that** the communicating pipe (38) is constructed as a capacitive measured value transmitter for supply of a filling state signal.

9. Beverage preparation device according to claim 8, **characterised in that** the communicating pipe (38) has two electrodes (46) which are arranged to be opposite and in the length direction of the pipe (38).

10. Beverage preparation device according to claim 8 or 9, **characterised in that** the content of the communicating pipe (38) functions as a dielectric.

11. Beverage preparation device according to one of claims 1 to 8, **characterised in that** the communicating pipe (38) is constructed as an inductive measuring pick-up for supply of a filling state signal.

12. Beverage preparation device according to one of the preceding claims, **characterised in that** a non-return valve (42) is arranged within the duct (32) between container (24) and beverage preparing equipment.

## Revendications

1. Dispositif de préparation de boissons (8) comprenant un réservoir (24), qui présente un écoulement (26) sur le fond du réservoir (28), sur lequel du liquide (34) peut être prélevé par une conduite (32) pour une boisson à préparer, et qui peut être enlevé du dispositif de préparation de boissons (8) ou séparé de celui-ci, **caractérisé par**
un tube communicant (38) équipé d'un dispositif de mesure électrique pour un niveau de remplissage (40) actuel dans le réservoir (24), le tube communicant (38) étant en liaison sur une extrémité inférieure avec l'écoulement (26) du fond du réservoir (28) et dont l'extrémité supérieure ouverte va au moins jusqu'à un niveau de remplissage maximum dans le réservoir (24).

2. Dispositif de préparation de boissons selon la revendication 1, **caractérisé en ce que** le réservoir (24) est relié à la conduite (32) au moyen d'une liaison séparable à emboîtement, encliquetage, vissage ou baïonnette.

3. Dispositif de préparation de boissons selon la revendication 1 ou 2, **caractérisé en ce que** le tube communicant (38) est au moins en partie transparent ou translucide.

4. Dispositif de préparation de boissons selon la revendication 3, **caractérisé en ce que** le niveau de remplissage (40) dans le réservoir (24) peut être relevé au moyen d'un voyant (22) dans le tube communicant (38) et/ou dans un boîtier (12) du dispositif de préparation de boissons (8).

5. Dispositif de préparation de boissons selon la revendication 3 ou 4, **caractérisé en ce qu'**un flotteur (44) est disposé à l'intérieur du tube communicant (38).

6. Dispositif de préparation de boissons selon la revendication 5, **caractérisé en ce que** le niveau de remplissage (40) dans le réservoir (24) peut être lu au moyen d'un niveau de flotteur actuel.

7. Dispositif de préparation de boissons selon la revendication 5, **caractérisé en ce que** le flotteur (44) est couplé avec un capteur de mesure dépendant de la course et/ou de l'angle pour la sortie d'un signal de niveau de remplissage.

8. Dispositif de préparation de boissons selon l'une quelconque des revendications précédentes, **caractérisé en ce que** le tube communicant (38) est conçu comme capteur de mesure capacitif pour la sortie d'un signal de niveau de remplissage.

9. Dispositif de préparation de boissons selon la revendication 8, **caractérisé en ce que** le tube communicant (38) présente deux électrodes (46) qui sont disposées l'une en face de l'autre et dans le sens d'extension longitudinale du tube (38).

10. Dispositif de préparation de boissons selon la revendication 8 ou 9, **caractérisé en ce que** le contenu du tube communicant (38) fait office de diélectrique.

11. Dispositif de préparation de boissons selon l'une quelconque des revendications 1 à 7, **caractérisé en ce que** le tube communicant (38) est conçu comme un transducteur inductif pour la sortie d'un signal de niveau de remplissage.

12. Dispositif de préparation de boissons selon l'une quelconque des revendications précédentes, **caractérisé en ce qu'**une soupape de non-retour (42) est disposée à l'intérieur de la conduite (32) entre le réservoir (24) et l'installation de préparation de boissons.
